**Europäisches Patentamt**

(19) **European Patent Office**

**Office européen des brevets**

(11) Numéro de publication: **0 167 415**
**B1**

(12) **FASCICULE DE BREVET EUROPEEN**

(45) Date de publication du fascicule du brevet:
**28.12.88**

(51) Int. Cl.⁴: **F 16 D 7/04,** F 16 D 7/06

(21) Numéro de dépôt: **85400678.0**

(22) Date de dépôt: **04.04.85**

(54) **Limiteur de couple.**

(30) Priorité: **04.04.84 FR 8405312**

(43) Date de publication de la demande:
**08.01.86 Bulletin 86/2**

(45) Mention de la délivrance du brevet:
**28.12.88 Bulletin 88/52**

(84) Etats contractants désignés:
**BE CH DE GB IT LI NL SE**

(56) Documents cités:
**DE-B- 1 258 225**
**DE-B- 1 299 952**
**FR-A- 1 212 554**
**FR-A- 2 291 409**
**FR-A- 2 483 026**
**FR-A- 2 529 280**
**GB-A- 881 560**
**GB-A- 2 037 908**
**GB-A- 2 082 695**
**US-A- 2 919 602**

(73) Titulaire: **A.C.C.E.L. LES ACCESSOIRES
ELECTRONIQUES, 35-37 Rue de la Mare, F-75020 Paris
(FR)**

(72) Inventeur: **Servent, Jean Marie, 189 Avenue du Maine,
F-75014 Paris (FR)**

(74) Mandataire: **Picard, Jean-Claude Georges et al, Cabinet
Plasseraud 84, rue d'Amsterdam, F-75009 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit
être formée par écrit et motivée. Elle n'est réputée formée qu'après paiement de la taxe d'opposition (Art. 99(1) Convention sur le
brevet européen).

## Description

La présente invention concerne d'une façon générale les limiteurs de couple, et plus particulièrement un limiteur de couple dit synchrone à action radiale, notamment pour machines-outils et analogues, du type général défini au préambule de la revendication 1.

On connaît déjà dans la technique des limiteurs de couple qui comprennent un galet ou une bille mobiles radialement dans une partie menante du limiteur, qui est repoussé par un moyen à ressort dans un évasement prévu dans la périphérie intérieure d'une partie menée coaxiale et entourant la partie menante (voir par exemple les brevets français No. 2 483 026 et U.S. No. 2 919 602). Dans ces limiteurs, sous l'effet d'une surcharge angulaire le galet ou la bille tendent à sortir de leur logement pour ainsi désolidariser la partie menante et la partie menée. Les documents GB-A 2 037 908 et FR-A 2 529 280 décrivent également de tels limiteurs.

Cependant tous les systèmes de l'art antérieur présentent un certain nombre d'inconvénients. Tout d'abord, il apparaît clairement que le couple nécessaire pour faire sortir la bille de son logement augmente progressivement pendant ladite sortie, du fait que la compression du moyen élastique s'accroît lors de ce mouvement et qu'il en résulte une zone oscillatoire pour des valeurs de couple comprises entre le couple de décollement de la bille du fond de son logement et le couple de verrouillage effectif. Cette zone oscillatoire, dangereusement importante, fait obstacle à une bonne précision du tarage et rend impossible une protection efficace contre les chocs mécaniques correspondant à une surcharge de durée limitée.

En outre, le couple résiduel du limiteur une fois que, sous l'action d'une surchargé de couple, le galet ou la bille sortis de leur logement roulent sur la périphérie intérieure de la partie menée, peut atteindre 30 à 40% de la valeur du couple de tarage ou couple limite. Ainsi, un réindexage automatique de l'arbre menant et de l'arbre mené, particulièrement souhaitable dans les opérations d'usinage automatisées, est rendu impossible, sauf à faire appel à un système annexe de bridage de la partie menante pour rétablir le verrouillage par une rotation de celle-ci. Une telle solution est complexe et onéreuse.

Enfin, aucun des systèmes limiteurs de l'art antérieur ne présente une caractéristique de rattrapage automatique des jeux dus aux imperfections de fabrication, ce qui altère substantiellement leur précision en ce qui concerne la transmission de mouvements de la machine, ainsi que le réindexage.

La présente invention vise à pallier ces inconvénients et à proposer un limiteur de couple qui présente des caractéristiques de fonctionnement particulièrement adaptées aux machines d'usinage de haute précision, dont le couple de tarage ou couple limite puisse être déterminé avec précision, le déverrouillage de la partie menante et de la partie menée pouvant être réalisé de façon tout à fait rapide et fiable.

A cet effet, la présente invention concerne un limiteur de couple du type défini au début et conforme à la partie caractérisante de la revendication 1.

La présente invention sera mieux comprise à la lecture de la description détaillée suivante, donnée à titre d'exemple et faite avec référence aux dessins annexés dans lesquels:

la figure 1 est une vue en couple longitudinale d'une première forme de réalisation préférée d'un limiteur de couple selon la présente invention;

la figure 2 est une vue en plan partiellement arrachée du limiteur de la figure 1;

la figure 3A et la figure 3B sont deux vues en coupe transversale partielle du limiteur des figures 1 et 2, destinées à illustrer le fonctionnement de celui-ci;

la figure 4 est une vue en coupe transversale partielle d'une seconde forme de réalisation d'un limiteur de couple selon la présente invention; et

la figure 5 est une vue en coupe transversale partielle d'une troisième forme de réalisation d'un limiteur de couple selon la présente invention.

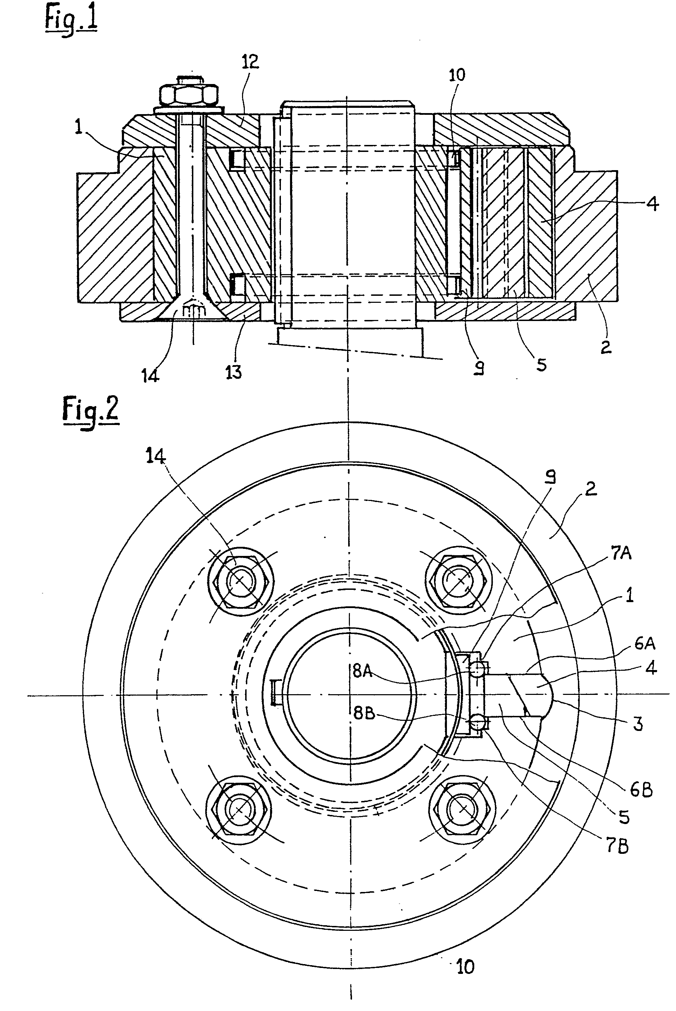

Avec référence aux figures 1 et 2, un limiteur de couple selon une première forme de réalisation de l'invention comprend une partie menante 1 qui présente un alésage axial destiné à recevoir un arbre d'entraînement menant (non représenté) auquel elle peut être solidarisée en rotation par tout moyen approprié, et présente en outre un évidement axial en forme de T à double épaulement définissant deux faces radiales de coulissement parallèles 6A et 6B délimitées vers l'intérieur par deux arêtes axiales 7A et 7B. La partie menante 1 est montée rotative coaxialement dans une partie menée 2 en forme de couronne, sur laquelle peut être rendu solidaire en rotation un arbre mené (non représenté), de façon appropriée. La face intérieure de la partie menée 2 présente une gorge 3 s'étendant axialement, de forme sensiblement arrondie, agencée pour recevoir l'extrémité extérieure d'un doigt de verrouillage 4, de forme correspondante. L'organe ou doigt 4 est monté coulissant dans ledit évidement radial. Des boulons de fixation 14 sont prévus pour rendre solidaires les deux plateaux 12, 13 de la partie menante 1, ces plateaux étant agencés pour maintenir en place axialement sans la serrer la partie menée 2.

L'ensemble de verrouillage du limiteur selon cette première forme de réalisation comprend une platine de poussée 9 assujettie à l'action d'un ressort à lame circulaire 10 et agencée pour transmettre la force de poussée radiale dirigée vers l'extérieur exercée par celui-ci vers une cale de centrage 5, par l'intermédiaire de deux galets intermédiaires de répartition 8A, 8B. Les galets 8A, 8B sont reçus dans des renfoncements latéraux intérieurs de l'évidement en forme de T et coopèrent d'une part avec lesdites arêtes 7A, 7B de la partie menante, et d'autre part avec les arêtes de bordure intérieure de la cale de centrage ou organe intermédiaire 5, de la manière illustré.

Cette disposition définit une certaine répartition de la force exercée par le resort 10, transmise par la platine 9, entre une composante radiale appliquée à la cale 5 et une composante appliquée aux arêtes 7A, 7B. La cale 5 transmet la poussée qu'elle reçoit au doigt de verrouillage 4 à travers deux surfaces obliques complémentaires de la cale et du doigt, et agit pour maintenir le doigt de verrouillage 4 dans sa gorge 3 de la partie menée, de manière à ce que les parties menée et menante soient solidaires en rotation, afin de transmettre un couple d'un moyen d'entraînement vers une partie à entraîner.

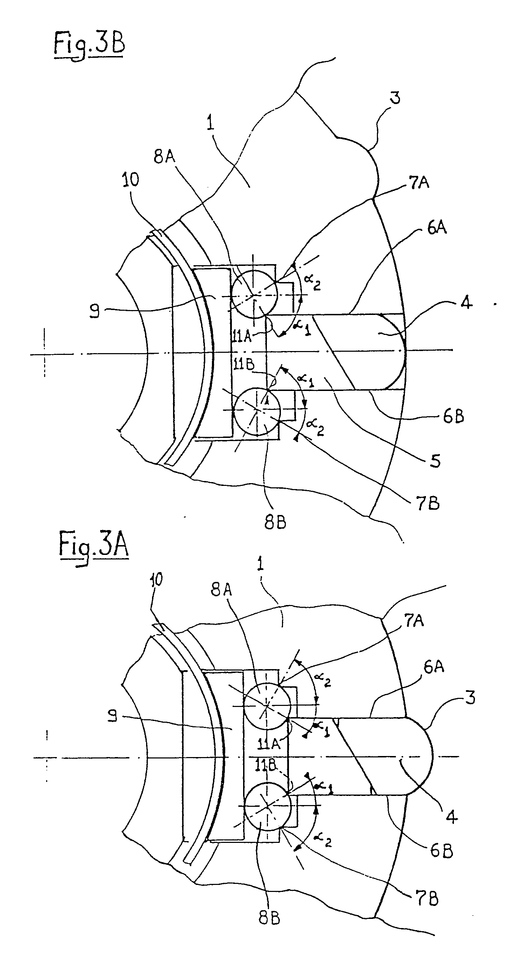

En référence aux figures 3A et 3B, le fonctionnement du limiteur de couple décrit ci-dessus est le suivant. Lorsque apparaît entre la partie menante et la partie menée un couple excessif, l'effort transversal correspondant s'exerçant entre le doigt 4 et sa gorge 3 tend à faire sortir le premier de la dernière, en s'opposant à l'action du ressort 10. Ce mouvement radial vers l'intérieur est transmis à la cale 5 dont les arêtes intérieures 11A, 11B en contact avec les galets intermédiaires 8A, 8B vont pouvoir écarter ceux-ci plus loin dans les renfoncements de l'évidement radial en T, par un mouvement de pivotement autour des arêtes 7A, 7B de la partie menante, ce qui a pour conséquence fondamentale (i) de modifier la répartition de la force du ressort 10 de manière à ce qu'en résulte une diminution progressive de la composante radiale appliquée à la cale 5, en fonction du degré d'enfoncement radial du doigt 4, et (ii) d'obtenir un déplacement radial de la platine de poussée 9 qui est soumise à l'action du ressort 10, plus faible que le déplacement réel du doigt de verrouillage 4, et donc une moindre surcompression du ressort 10 au cours du déverrouillage (figure 3B).

Ainsi, selon la présente invention, le déverrouillage en cas d'apparition d'un couple à transmettre excessif (par exemple en cas de blocage d'un outil dans une pièce d'usinage) est immédiat, et la machine sur laquelle est monté le limiteur, le plus souvent très complexe et onéreuse, n'encourra ainsi aucun risque de détérioration par prolongation de l'existence d'un couple excessif.

Bien entendu, on calculera les dimensions des divers organes de l'ensemble de verrouillage de manière à ce que la force exercée par le ressort 10 puisse encore s'exercer par l'intermédiaire des galets 8A, 8B, lorsque l'organe de verrouillage est en position complètement rétractée, de manière à pouvoir ultérieurement ramener l'ensemble en position de verrouillage.

Une autre caractéristique du présent limiteur de couple réside dans le fait que, en position déverrouillée (figure 3B), la force de rappel exercée par le ressort 10 est considérablement réduite, sans toutefois être nulle, comme on l'a dit, le couple de frottement dans cette position étant ainsi avantageusement faible et une réindexage automatique après déverrouillage ouvant ainsi être très facilement réalisé.

En outre, les opérations décrites ci-dessus étant inversées lors de la remise en verrouillage, on retrouve ainsi le couple de tarage ou valeur de couple limite d'origine, et ce avec une grande précision.

Enfin, la structure de ce limiteur de couple permet avantageusement un autorattrapage des jeux de fonctionnement, un réindexage tout à fait précis pouvant être réalisé.

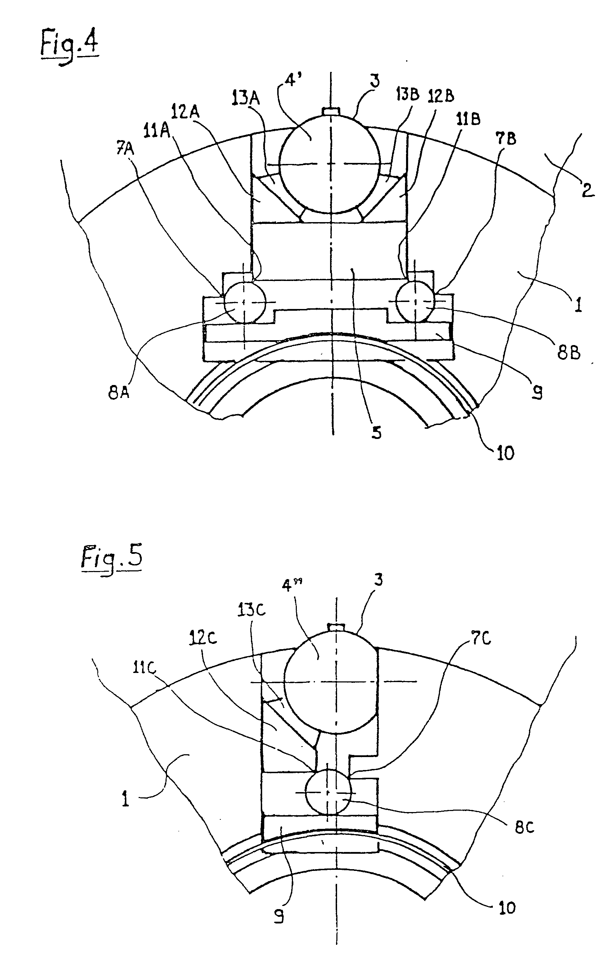

Sur les figures 4 et 5 sont décrites deux variantes de réalisation d'un limiteur de couple selon l'invention. Sur ces figures, des éléments identiques à ceux des figures 1, 2, 3A et 3B sont désignés par les mêmes numéros de référence.

En référence à la figure 4, l'organe de verrouillage en forme de doigt des figures 1 et 2 est remplacé par un galet de verrouillage 4' centré au moyen de deux cales auxiliaire de centrage 12A, 12B coopérant d'une part avec la cale de centrage 5 et d'autre part avec les faces latérales 6A, 6B de l'évidement de la partie menante 1. Des patins 13A, 13B sont prévus entre les organes 12A, 12B et le galet 4'. Bien entendu, dans cette forme de réalisation, la gorge 3 de la partie menée présente une forme courbe s'adaptant à la forme dudit galet 4'. En outre, le fonctionnement de cette variante est analogue à celui de la forme de réalisation des figures 1 et 2 en ce qui concerne les comportements respectifs des galets 8A, 8B et des diverses arêtes avec lesquelles ils coopèrent pour obtenir les caractéristiques mentionnées ci-dessus.

En référence à la figure 5, les deux galets 8A, 8B de la figure 4 sont remplacés par un galet unique 8C, qui agit directement sur un organe de centrage intermédiaire 12C coopérant lui-même avec un galet de verrouillage 4" présentant un méplat en contact avec la face latérale de l'évidement. L'action de dégagement latéral du galet intermédiaire 8C en cas de déverrouillage est tout à fait analogue à celle des galets 8A, 8B des formes de réalisations précédentes, les caractéristiques avantageuses obtenus étant conservées. (Bien entendu, seules deux arêtes 7C, 11C coopèrent avec ledit galet intermédiaire).

Bien entendu, la présente invention n'est pas limitée aux formes de réalisation décrites, et inclut toute variante ou modification que pourra y apporter l'Homme de l'Art à l'aide de ses connaissances. En particulier, on pourra déterminer avec précision les divers angles d'attaque ($\alpha 1$, $\alpha 2$; figures 3A et 3B) des arêtes sur les galets intermédiaires, en dimensionnant de façon appropriée ces organes, pour obtenir des caractéristiques transitoires couple limite/couple à l'état déverrouillé souhaitées. Le choix d'un couple de tarage ou couple limite souhaité pourra en outre être déterminé facilement, soit en interchangeant le ressort 10, soit en montant dans la structure des galets intermédiaires de diamètre différent.

## Revendications

1. Limiteur de couple du type comprenant une partie menante (1) et une partie menée (2) coaxiales l'une avec l'autre, un organe de verrouillage (4; 4'; 4″) mobile radialement vis-à-vis de ladite partie menante (1) et agencé pour être repoussé par un moyen élastique (10) dans une gorge associée ménagée dans la périphérie intérieure de la partie menée, caractérisé en ce qu'il comprend, entre ledit moyen élastique (10) et ledit organe de verrouillage (4; 4'; 4″), un organe intermédiaire (5; 12A; 12B; 12C;) apte à transmettre une force de poussée de verrouillage radiale vers ledit organe de verrouillage, et au moins un organe d'autorépartition (8A; 8B; 8C) des forces de poussée de verrouillage soumis à la force exercée par le moyen élastique et en contact avec deux arêtes (7A, 7B, 11A, 11B; 7C, 11C) parallèles et s'étendant en direction axiale, respectivement prévues sur l'organe intermédiaire et dans la paroi latérale d'une cavité ménagée dans le corps de la partie menante pour recevoir lesdits organes, l'organe d'autorépartition (8A; 8B; 8C) des forces de poussée de verrouillage étant apte à effectuer un déplacement angulaire par roulement sur lesdites deux arêtes, sous l'action de l'organe intermédiaire, lorsque l'organe de verrouillage est amené à sortir de sa gorge, pour ainsi passer brusquement d'un premier état, dans lequel la force exercée par le moyen élastique (10) est répartie majoritairement vers l'organe intermédiaire, à un second état, dans lequel ladite force est transmise majoritairement vers le corps de la partie menante (1).

2. Limiteur selon la revendication 1, caractérisé en ce que chaque organe d'autorépartition présente la forme d'un galet (8A, 8B) d'axe perpendiculaire à la direction de déplacement de l'organe intermédiaire (5) et parallèle auxdites arêtes associées (7A, 7B; 11A, 11B).

3. Limiteur selon l'une quelconque des revendications 1 et 2, caractérisé en ce que l'organe de verrouillage (4) et l'organe intermédiaire (5) sont rendus radialement solidaires en poussée par des faces de contact obliques respectives de ceux-ci.

4. Limiteur selon la revendication 3, caractérisé en ce que l'organe de verrouillage (4) présente la forme d'un doigt dont l'extrémité radialement extérieure est arrondie.

5. Limiteur selon l'une quelconque des revendications 1 et 2, caractérisé en ce que l'organe de verrouillage (4') présente la forme d'un galet, et est rendu radialement solidaire en poussée de l'organe intermédiaire (5) à l'aide d'organes auxiliaires (12A, 12B) en forme de coins de centrage du galet.

6. Limiteur selon l'une quelconque des revendications 1 et 2, caractérisé en ce que l'organe de verrouillage (4″) présente la forme d'un galet pourvu d'un méplat latéral en contact glissant avec une paroi d'un logement dudit organe, le galet étant rendu radialement solidaire en poussée de l'organe intermédiaire (12C) à l'aide d'un patin (13C) de centrage.

7. Limiteur selon l'une quelconque des revendications 1 à 6, caractérisé en ce que la ou les arêtes (11A; 11B; 11C) prévues sur l'organe intermédiaire (5; 12C) sont les arêtes qui définissent l'extrémité radialement intérieure dudit organe.

8. Limiteur selon l'une quelconque des revendications 1 à 7, caractérisé en ce que la ou les arêtes (7A, 7B; 7C) prévus dans le corps de la partie menante (1) délimitent des prolongements latéraux aptes à recevoir au moins partiellement les organes d'autorépartition lorsque ceux-ci passent dudit premier état audit second état.

9. Limiteur selon l'une quelconque des revendications 1 à 8, caractérisé en ce que le moyen élastique comprend un ressort à lame circulaire (10) d'axe commun avec les parties menante et menée.

10. Limiteur selon la revendication 9, caractérisé en ce que la force exercé par le moyen élastique est transmise à chaque organe d'autorépartition (8A, 8B; 8C) par l'intermédiaire d'une platine de poussée (9).

## Patentansprüche

1. Drehmomentbegrenzer, der aus einem treibenden Teil (1) und einem angetriebenen Teil (2), die koaxial zueinander angeordnet sind, und einem Verriegelungsorgan (4; 4'; 4″) besteht, das in radialer Richtung gegenüber dem treibenden Teil (1) beweglich und so angeordnet ist, dass es durch ein elastisches Mittel (10) in eine Rinne zurückgedrückt werden kann, die am inneren Umfang des angetriebenen Teils ausgespart ist, dadurch gekennzeichnet, dass zwischen dem elastischen Mittel (10) und dem Verriegelungsorgan (4; 4'; 4″) ein Zwischenstück (5; 12A; 12B; 12C), das eine radiale Druckkraft zur Verriegelung auf das Verriegelungsorgan ausübt und wenigstens ein Werkstück (8A; 8B; 8C) zur selbsttätigen Verteilung der Verriegelungsdruckkräfte vorgesehen sind, das dem Druck unterworfen ist, der durch das elastische Mittel ausgeübt wird und an zwei Kanten (7A, 7B, 11A, 11B; 7C, 11C) anliegt, die parallel zueinander verlaufen, sich in axialer Richtung erstrecken und an dem Zwischenstück bzw. an der seitlichen Wandung einer Ausnehmung vorgesehen sind, die in dem Körper des treibenden Teils angebracht ist, um das Verriegelungsorgan, das Zwischenstück und das Werkstück aufzunehmen, wobei das Werkstück (8A; 8B; 8C) zur Verteilung der Druckkräfte für die Verriegelung unter der Wirkung des Zwischenstückes eine Winkelverschiebung durch Abrollen auf den beiden Kanten ausführen kann, wenn das Verriegelungsorgan aus der Rinne herausgedrückt wird und auf diese Weise schlagartig aus einem ersten Zustand, in dem der durch das elastische Mittel (10) ausgeübte Druck hauptsächlich auf das Zwischenstück verteilt wird, in einen zweiten Zustand übergeht, in dem der Druck hauptsächlich auf den Körper des treibenden Teils (1) übertragen wird.

2. Drehmomentbegrenzer nach Anspruch 1, dadurch gekennzeichnet, dass die Werkstücke zur Verteilung der Druckkräfte aus Walzen (8A, 8B) bestehen, deren Achsen senkrecht zu der Richtung, in der sich das Zwischenstück (5) verschiebt und parallel zu den zugehörigen Kanten (7A, 7B; 11A, 11B) verlaufen.

3. Drehmomentbegrenzer nach einem der vorhergehenden Ansprüche, dadurch gekennzeichnet, dass Verriegelungsorgan (4) und das Zwischenstück (5) in radialer Richtung formschlüssig unter Druck an geeignet verlaufenden Kontaktflächen aneinander anliegen, die an diesen Teilen vorgesehen sind.

4. Drehmomentbegrenzer nach Anspruch 3, dadurch gekennzeichnet, dass das Verriegelungsorgan (4) die Form eines Fingers hat, dessen in radialer Richtung äusseres Ende abgerundet ist.

5. Drehmomentbegrenzer nach einem der Ansprüche 1 bis 2, dadurch gekennzeichnet, dass das Verriegelungsorgan (4') die Form einer Walze hat, die in radialer Richtung formschlüssig unter Druck an dem Zwischenstück (5) über zusätzliche Eckstücke (12A, 12B) anliegt, die auf die Walze zentriert sind.

6. Drehmomentbegrenzer nach einem der vorhergehenden Ansprüche, dadurch gekennzeichnet, dass das Verriegelungsorgan (4") die Form einer Walze hat, die mit einer seitlichen Abflachung versehen ist, die an einer Wandung eines Lagers des Organs gleitend anliegt, wobei die Walze in radialer Richtung formschlüssig unter Druck an dem Zwischenstück (12C) über einen Zentrierschuh (13C) anliegt.

7. Drehmomentbegrenzer nach einem der Ansprüche 1 bis 6, dadurch gekennzeichnet, dass der oder die Kanten (11A; 11B; 11C), die an dem Zwischenstück (5; 12C) vorgesehen sind, durch die Ränder gebildet werden, die in radialer Richtung das innere Ende des Verriegelungsorgans begrenzen.

8. Drehmomentbegrenzer nach einem der Ansprüche 1 bis 7, dadurch gekennzeichnet, dass die Kante oder Kanten (7A, 7B; 7C) des Körpers des treibenden Teils (1) seitliche Verlängerungen begrenzen, die wenigstens teilweise die Werkstücke zur Verteilung der Druckkräfte aufnehmen, wenn sich diese aus dem erwähnten ersten in den zweiten Zustand verschieben,

9. Drehmomentbegrenzer nach einem der Ansprüche 1 bis 8, dadurch gekennzeichnet, dass das elastische Mittel aus einer Rundfeder (10) besteht, deren Achse mit den Achsen des treibenden und des angetriebenen Teils übereinstimmt.

10. Drehmomentbegrenzer nach Anspruch 9, dadurch gekennzeichnet, dass der durch das elastische Mittel ausgeübte Druck auf die Werkstücke (8A, 8B; 8C) zur Verteilung der Druckkräfte durch Einfügen einer Druckplatte (9) übertragen wird.

**Claims**

1. A torque limiter of the kind comprising a driving part (1) and a driven part (2) which are coaxial with each other, a locking member (4; 4'; 4") which is movable radially with respect to the said driving part (1) and is arranged to be urged by resilient means (10) into an associated groove formed in the inner periphery of the driven part, characterized in that the torque limiter includes, between the said resilient means (10) and the said locking member (4; 4'; 4"), an intermediate member (5; 12A; 12B; 12C) adapted to transmit a radial locking thrust force towards the said locking member, and at least one automatic distributing member (8A; 8B; 8C) for the locking thrust forces, said at least one distributing member being subjected to the force exerted by the resilient means and being in contact with two stops (7A, 7B, 11A, 11B; 7C, 11C) parallel to each other and extending in an axial direction, the said stops being respectively provided on the intermediate member and in the lateral wall of a cavity formed in the body of the driving part in order to receive the said members, the automatic distributing member (8A; 8B; 8C) for the locking thrust forces being adapted to undergo an angular displacement by rolling movement on the said two stops, under the action of the intermediate member, when the locking member is positioned so as to move out of its groove, whereby to change sharply from a first condition in which the force exerted by the resilient means (10) is directed mainly towards the intermediate member, to a second condition in which the said force is transmitted mainly towards the body of the driving part (1).

2. A torque limiter according to Claim 1, characterised in that each said automatic force distributing member is in the form of a roller (8A, 8B) having its axis perpendicular to the direction of displacement of the intermediate member (5) and parallel to the said associated stops (7A, 7B; 11A, 11B).

3. A torque limiter according to either one of Claims 1 and 2, characterised in that the locking member (4) and the intermediate member (5) are effectively coupled together radially under thrust through respective oblique contact faces of the latter.

4. A torque limiter according to Claim 3, characterised in that the locking member (4) is in the form of a finger, the radially outermost end of which is rounded.

5. A torque limiter according to either one of Claims 1 and 2, characterised in that the locking member (4') is in the form of a roller, and is effectively coupled radially under thrust with the intermediate member (5) by means of auxiliary elements (12A, 12B) in the form of centring corners of the roller.

6. A torque limiter according to either one of Claims 1 and 2, characterised in that the locking member (4") is in the form of a roller, provided with a laterally extending flat portion which is in sliding contact with one wall of a housing of the said member, the roller being effectively coupled radially under thrust with the intermediate member (12C) by means of a centring foot (13C).

7. A torque limiter according to any one of Claims 1 to 6, characterised in that the stop or stops (11A; 11B; 11C) provided on the intermediate member (5; 12C) are the stops which define the radially innermost end of the said member.

8. A torque limiter according to any one of Claims 1 to 7, characterised in that the stop or stops (7A, 7B; 7C) provided in the body of the driving part (1) delimit laterally extending projections adapted to receive at least partially the automatic force distributing members when the latter change from the said first condition to the said second condition.

9. A torque limiter according to any one of Claims 1 to 8, characterised in that the resilient means is in the form of an arcuate leaf spring (10) coaxial with the driving and driven parts.

10. A torque limiter according to Claim 9, characterised in that the force exerted by the resilient means is transmitted to each of the said automatic force distributing members (8A, 8B; 8C) by means of a thrust plate (9).

Fig.1

Fig.2

7

Fig.3B

Fig.3A

Fig.4

Fig.5